(19) Europäisches Patentamt / European Patent Office / Office européen des brevets

(11) **EP 3 671 569 A1**

(12) **EUROPÄISCHE PATENTANMELDUNG**

(43) Veröffentlichungstag:
**24.06.2020 Patentblatt 2020/26**

(21) Anmeldenummer: **18214361.0**

(22) Anmeldetag: **20.12.2018**

(51) Int Cl.:
*G06N 3/04* (2006.01)      *G06N 5/04* (2006.01)
*G06N 7/00* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft
80333 München (DE)**

(72) Erfinder: **Langen, Manfred
81827 München (DE)**

(54) **METADATENBASIERTE NACHVOLLZIEHBARKEIT VON KI-AUSGABEN**

(57) In einem hybriden KI-System erfasst eine Vorrichtung (100) KI-Ausgaben (21, 22, 23, 24), welche von einer Vielzahl von KI-Systemen (111, 112, 113, 114) bereitgestellt werden. Die Vorrichtung (100) kombiniert die KI-Ausgaben (21, 22, 23, 24) der KI-Systeme (111, 112, 113, 114) zu einer kombinierten KI-Ausgabe (31). Die Vorrichtung (100) bestimmt weiterhin Metadaten (32) zu der kombinierten KI-Ausgabe (31). Die Metadaten beschreiben eine Herleitung wenigstens einer der KI-Ausgaben (21, 22, 23, 24) und gibt die kombinierte KI-Entscheidung (31) und die Metadaten (32) aus.

FIG 1

EP 3 671 569 A1

**Beschreibung**

Die vorliegende Offenbarung betrifft Verfahren, Vorrichtungen und Computerprogramme zur Verarbeitung von KI-Daten.

Bei KI-Systemen (KI: "künstliche Intelligenz") beruht eine KI-Entscheidung oder ähnliche KI-Ausgabe typischerweise auf einer Korrelation oder kausalen Verknüpfung von Eingangsdaten des KI-Systems. Im Falle einer kausalen Verknüpfung ist die KI-Ausgabe für einen Benutzer des KI-Systems in der Regel gut nachvollziehbar. Bei auf Korrelationen beruhenden KI-Ausgaben oder komplexeren Kausalitäten ist eine solche Nachvollziehbarkeit jedoch mitunter nicht gewährleistet. Dies gilt insbesondere für KI-Ausgaben die auf Korrelation der Eingangsdaten durch ein neuronales Netz oder ähnliche KI-Verfahren, die auf einem trainierten Mustervergleich oder maschinenbasierten Lernalgorithmus, z.B. so genanntem "Deep Learning", beruhen. Probleme bei der Nachvollziehbarkeit von KI-Ausgaben können auch dann bestehen, wenn das KI-System auf einem Algorithmus basiert, dessen Funktionsweise dem Benutzer des KI-Systems nicht offenbart werden soll.

Es besteht daher ein Bedarf für Technologien, welche eine verbesserte Nachvollziehbarkeit von KI-Ausgaben ermöglichen.

Erfindungsgemäß wird diese Aufgabe gelöst durch eine Vorrichtung nach Anspruch 1, durch ein Verfahren nach Anspruch 10 und durch ein Computerprogrammprodukt nach Anspruch 19. Die abhängigen Ansprüche definieren weitere Ausführungsformen.

Gemäß einem Ausführungsbeispiel wird eine Vorrichtung zur Verarbeitung von KI-Daten offenbart. Die Vorrichtung kann beispielsweise Teil eines hybriden KI-Systems mit mehreren KI-Systemen sein. Die Vorrichtung ist ausgestaltet zum:

- Erfassen von KI-Ausgaben, welche von einer Vielzahl von KI-Systemen bereitgestellt werden,
- Kombinieren der KI-Ausgaben der KI-Systeme zu einer kombinierten KI-Ausgabe,
- Bestimmen von Metadaten zu der kombinierten KI-Ausgabe, welche eine Herleitung wenigstens einer der KI-Ausgaben beschreiben, und
- Ausgeben der kombinierten KI-Entscheidung und der Metadaten.

Durch die bereitgestellten Metadaten wird eine verbesserte Nachvollziehbarkeit der kombinierten KI-Ausgabe erreicht.

Gemäß einem Ausführungsbeispiel ist die Vorrichtung weiterhin ausgestaltet zum:

- Erfassen einer Benutzereingabe, und
- Bestimmen der Metadaten abhängig von der Benutzereingabe. Auf diese Weise kann die Bereitstellung der Metadaten durch den Benutzer bedarfsgerecht konfiguriert werden.

Gemäß einem Ausführungsbeispiel ist die Vorrichtung weiterhin ausgestaltet zum:

- Erfassen einer Benutzereingabe, und
- Kombinieren der KI-Ausgaben zu der kombinierten KI-Ausgabe abhängig von der Benutzereingabe.

Auf diese Weise kann dem Benutzer ermöglicht werden, die Berücksichtigung der einzelnen KI-Ausgaben in der kombinierten KI-Ausgabe flexibel zu konfigurieren.

Gemäß einem Ausführungsbeispiel der Vorrichtung umfasst das Kombinieren der KI-Ausgaben ein Auswählen aus den KI-Ausgaben der KI-Systeme.

Gemäß einem Ausführungsbeispiel der Vorrichtung basiert das Kombinieren der KI-Ausgaben auf einer Metrik, welche Werte der KI-Ausgaben auf einen kombinierten Wert abbildet. In diesem Fall können die Metadaten auch Informationen zur Bestimmung der Metrik umfassen.

Gemäß einem Ausführungsbeispiel ist die Vorrichtung weiterhin ausgestaltet zum:

- Erfassen einer Benutzereingabe, und
- basierend auf der Benutzereingabe Bestimmen einer Gewichtung der KI-Ausgaben in der Metrik.

Auf diese Weise kann dem Benutzer ermöglicht werden, die Berücksichtigung der einzelnen KI-Ausgaben in der Metrik flexibel zu konfigurieren.

Gemäß einem Ausführungsbeispiel der Vorrichtung umfassen die KI-Systeme wenigstens ein KI-System, welches auf einem regelbasierten und/oder statistischen KI-Verfahren basiert. In diesem Fall können die Metadaten die Herleitung der KI-Ausgabe für das auf dem regelbasierten und/oder statistischen KI-Verfahren basierende KI-System beschreiben. Die Metadaten zu dieser KI-Ausgabe können dann auch als Erklärungskomponente für andere KI-Ausgaben dienen.

Gemäß einem Ausführungsbeispiel der Vorrichtung umfassen die KI-Systeme darüber hinaus wenigstens ein KI-System, welches auf einem neuronalen Netz basiert. Die bereitgestellten Metadaten können dann auch als Erklärungskomponente für die KI-Ausgabe des neuronalen Netzes dienen.

Gemäß einem Ausführungsbeispiel der Vorrichtung umfassen die KI-Systeme darüber hinaus wenigstens ein KI-System, welches auf einem für einen Benutzer der Vorrichtung als geheim eingestuften KI-Verfahren basiert. Die bereitgestellten Metadaten können dann auch als Erklärungskomponente für die KI-Ausgabe des als geheim eingestuften KI-Verfahrens dienen.

Gemäß einem weiteren Ausführungsbeispiel wird ein Verfahren zur Verarbeitung von KI-Daten offenbart. Das Verfahren kann beispielsweise durch die Vorrichtung gemäß den obigen Ausführungsbeispielen implementiert werden. Das Verfahren umfasst:

- Erfassen von KI-Ausgaben, welche von einer Vielzahl von KI-Systemen bereitgestellt werden,
- Kombinieren der KI-Ausgaben der KI-Systeme zu einer kombinierten KI-Ausgabe,
- Bestimmen von Metadaten zu der kombinierten KI-Ausgabe, welche eine Herleitung wenigstens einer der KI-Ausgaben beschreiben, und
- Ausgeben der kombinierten KI-Entscheidung und der Metadaten.

Gemäß einem Ausführungsbeispiel umfasst das Verfahren weiterhin:

- Erfassen einer Benutzereingabe, und
- Bestimmen der Metadaten abhängig von der Benutzereingabe.

Gemäß einem Ausführungsbeispiel umfasst das Verfahren weiterhin:

- Erfassen einer Benutzereingabe, und
- Kombinieren der der KI-Ausgaben zu der kombinierten KI-Ausgabe abhängig von der Benutzereingabe.

Gemäß einem Ausführungsbeispiel des Verfahrens umfasst das Kombinieren der KI-Ausgaben ein Auswählen aus den KI-Ausgaben der KI-Systeme.

Gemäß einem Ausführungsbeispiel des Verfahrens basiert das Kombinieren der KI-Ausgaben auf einer Metrik, welche Werte der KI-Ausgaben auf einen kombinierten Wert abbildet. In diesem Fall können die Metadaten auch Informationen zur Bestimmung der Metrik umfassen.

Gemäß einem Ausführungsbeispiel umfasst das Verfahren weiterhin:

- Erfassen einer Benutzereingabe, und
- basierend auf der Benutzereingabe Bestimmen einer Gewichtung der KI-Ausgaben in der Metrik.

Gemäß einem Ausführungsbeispiel des Verfahrens umfassen die KI-Systeme wenigstens ein KI-System, welches auf einem regelbasierten und/oder statistischen KI-Verfahren basiert. In diesem Fall können die Metadaten die Herleitung der KI-Ausgabe für das auf dem regelbasierten und/oder statistischen KI-Verfahren basierende KI-System beschreiben.

Gemäß einem Ausführungsbeispiel des Verfahrens umfassen die KI-Systeme darüber hinaus wenigstens ein KI-System, welches auf einem neuronalen Netz basiert.

Gemäß einem Ausführungsbeispiel des Verfahrens umfassen die KI-Systeme darüber hinaus wenigstens ein KI-System, welches auf einem für einen Benutzer der Vorrichtung als geheim eingestuften KI-Verfahren basiert.

Gemäß einem weiteren Ausführungsbeispiel wird ein Computerprogrammprodukt offenbart. Das Computerprogrammprodukt umfasst Programmcode, der bei Ausführung durch einen oder mehrere Prozessoren einer programmierbaren Vorrichtung bewirkt, dass die Vorrichtung ein Verfahren nach einem der obigen Ausführungsbeispiele ausführt.

Im Folgenden werden Ausführungsbeispiele der vorliegenden Erfindung unter Bezugnahme auf die beigefügten Figuren näher erläutert.

Fig. 1 veranschaulicht schematisch ein hybrides KI-System gemäß einem Ausführungsbeispiel.

Fig. 2 zeigt schematisch eine Vorrichtung gemäß einem Ausführungsbeispiel.

Fig. 3 zeigt ein Flussdiagramm zur Veranschaulichung eines Verfahrens gemäß einem Ausführungsbeispiel.

Bei der nachfolgenden Beschreibung von Ausführungsbeispielen versteht es sich, dass die beigefügten Zeichnungen als schematisch anzusehen sind, und dass die Zeichnungen und dargestellten Elemente nicht notwendigerweise maßstabsgerecht sind. Vielmehr sollen durch die Zeichnungen Funktionen und Zusammenwirken von Elementen und Komponenten veranschaulicht werden. Hierbei versteht es sich auch, dass jegliche Verbindung oder Kopplung von dargestellten funktionalen Blöcken, Vorrichtungen, Komponenten oder anderweitigen physischen oder funktionalen Elementen auch durch eine indirekte Verbindung oder Kopplung, z.B. über ein oder mehrere Zwischenelemente, implementiert sein könnte. Eine Verbindung zwischen Komponenten kann beispielweise über eine drahtgebundene und/oder drahtlose Datenverbindung implementiert sein. Funktionale Blöcke können durch Hardware, Firmware und/oder Software implementiert sein.

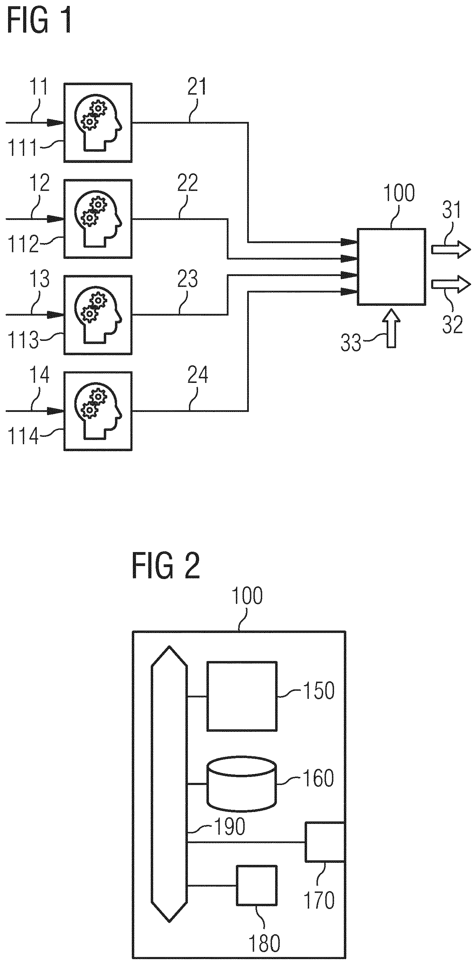

Fig. 1 veranschaulicht schematisch ein hybrides KI-System, welches auf einer Kooperation mehrerer KI-Systeme 111, 112, 113, 114 basiert. Die einzelnen KI-Systeme können dabei insbesondere auf verschiedenen Typen von KI-Verfahren beruhen. Diese KI-Verfahren können insbesondere regelbasierte KI-Verfahren, statistische KI-Verfahren und/oder auf maschinenbasiertem Lernen beruhenden KI-Verfahren wie z.B. einem neuronalen Netz oder Deep-Learning-Verfahren umfassen. Weiterhin können auch KI-Verfahren zum Einsatz kommen, die auf einem Algorithmus beruhen, der dem Benutzer des hybriden KI-Systems nicht offenbart werden soll, z.B. weil er als geistiges Eigentum des Entwicklers oder Herstellers des KI-Systems geschützt werden soll.

Im Folgenden wird davon ausgegangen, dass das KI-System 111 auf einem regelbasierten KI-Verfahren beruht, das Eingangsdaten 11 des KI-Systems 111 durch auf Kausalität beruhenden Regeln zu einer KI-Ausgabe 21 des KI-Systems 111 verknüpft. Weiterhin wird davon ausgegangen, dass das KI-System 112 auf einem statistischen KI-Verfahren beruht, das Eingangsdaten 12 des KI-Systems 112 durch statistische Korrelation zu einer KI-Ausgabe 22 des KI-Systems 112 verknüpft. Weiterhin wird davon ausgegangen, dass das KI-System 113 auf einem neuronalen Netz beruht, das Eingangsdaten 13 des KI-Systems 113 durch einen Mustervergleich zu einer KI-Ausgabe 23 des KI-Systems 113 verknüpft. Weiterhin wird davon ausgegangen, dass das KI-System 114 auf einem regelbasierten und/oder statistischen KI-Verfahren beruht, das Eingangsdaten 14 des KI-Systems 114 auf Basis eines Algorithmus zu einer KI-Ausgabe 24 des KI-Systems 114 verknüpft, wobei der Algorithmus gegenüber dem Benutzer des hybriden KI-Systems zumindest teilweise geheim gehalten werden soll. Bei dem dargestellten Beispiel können die KI-Systeme 111 und 112 somit als auf transparenten KI-Verfahren beruhend eingestuft werden, weil eine Herleitung der jeweiligen KI-Ausgabe 21, 22 aus den Eingangsdaten 11, 12 für den Benutzer nachvollziehbar gemacht werden kann, indem dem Benutzer Informationen zu den Eingangsdaten 11, 12 und den in dem KI-System 111 genutzten Regeln bzw. den in dem KI-System 112 genutzten Korrelationsverfahren zur Verfügung gestellt werden. Die KI-Systeme 113 und 114 können wiederum als auf nicht-transparenten KI-Verfahren beruhend eingestuft werden, weil die Herleitung der jeweiligen KI-Ausgabe 23 wegen der Nutzung des neuronalen Netzes prinzipiell schlecht nachvollziehbar ist oder weil im Falle des KI-Systems 114 Informationen, welche eine Nachvollziehbarkeit der Herleitung der KI-Ausgabe 24 ermöglichen würden, dem Benutzer nicht offenbart werden sollen.

Es versteht sich jedoch, dass die Anzahl und die Typen der dargestellten KI-Systeme 111, 112, 113, 114 lediglich beispielhaft sind und das bei anderen Implementierungen das hybride KI-System eine höhere oder niedrigere Anzahl von KI-Systemen beinhalten könnte und/oder das diese KI-Systeme auf anderen KI-Verfahren beruhen könnten. Insbesondere könnte das dargestellte hybride KI-System auf einer Vielzahl unterschiedlicher Kombinationen von transparenten und nicht-transparenten Verfahren beruhen.

Das dargestellte hybride KI-System umfasst weiterhin eine Vorrichtung 100, welche die KI-Ausgaben 21, 22, 23, 24 der einzelnen KI-Systeme 111, 112, 113, 114 erfasst, um daraus eine kombinierte KI-Ausgabe 31 zu bestimmen. Zu diesem Zweck kann die Vorrichtung 100 über eine entsprechende Datenschnittstelle mit den jeweiligen KI-Systemen 111, 112, 113, 114 gekoppelt sein. Es ist jedoch auch möglich, dass wenigstens eines der KI-Systeme 111, 112, 113, 114 als Teil der Vorrichtung 100 implementiert ist und die entsprechende KI-Ausgabe 21, 22, 23, 24 intern in der Vorrichtung 100 erfasst wird.

Die Kombination der KI-Ausgaben 21, 22, 23, 24 kann beispielsweise wie folgt implementiert sein: Ein Zustand eines Objekts durch verschiedene Eigenschaften definiert sein, deren Ausprägung durch einen Zugehörigkeitswert im Intervall [0, 1] repräsentiert wird. Die Eigenschaften können somit gemäß einer Fuzzy-Logik unscharf als Zahlenwerte repräsentiert werden. Eine Mehrzahl von Eigenschaften kann dann durch einen aus den Zugehörigkeitswerten gebildeten Zugehörigkeitsvektor oder eine aus den Eigenschaftswerten gebildete Zugehörigkeitsmatrix repräsentiert werden. Der Zugehörigkeitswert wird jeweils durch das in dem jeweiligen KI-System 111, 112, 113, 114 genutzte KI-Verfahren bestimmt und ist somit Teil der jeweiligen KI-Ausgabe 21, 22, 23, 24 des KI-Systems 111, 112, 113, 114.

Gemäß einem Beispiel kann ein Objekt *A* beschrieben werden als ein Satz von Eigenschaften:

$$\begin{bmatrix} A_1 \\ A_2 \\ A_3 \\ A_4 \end{bmatrix}$$

mit einem Zugehörigkeitsvektor

$$\begin{bmatrix} p_1 \\ p_2 \\ p_3 \\ p_4 \end{bmatrix}.$$

Hierbei liefert beispielsweise das KI-System 111 für das Eigenschaftsmerkmal $A_1$ den Zugehörigkeitswert $p_1$, das KI-System 112 für das Eigenschaftsmerkmal $A_2$ den Zugehörigkeitswert $p_2$, das KI-System 113 für das Eigenschaftsmerkmal $A_3$ den Zugehörigkeitswert $p_3$, und das KI-System 114 für das Eigenschaftsmerkmal $A_4$ den Zugehörigkeitswert $p_4$.

Ebenso kann ein Objekt $B$ beschrieben werden als ein Satz von Eigenschaften:

$$\begin{bmatrix} B_1 \\ B_2 \\ B_3 \\ B_4 \end{bmatrix}$$

mit einem Zugehörigkeitsvektor

$$\begin{bmatrix} q_1 \\ q_2 \\ q_3 \\ q_4 \end{bmatrix}.$$

Hierbei liefert beispielsweise das KI-System 111 für das Eigenschaftsmerkmal $B_1$ den Zugehörigkeitswert $q_1$, das KI-System 112 für das Eigenschaftsmerkmal $B_2$ den Zugehörigkeitswert $q_2$, das KI-System 113 für das Eigenschaftsmerkmal $B_3$ den Zugehörigkeitswert $q_3$, und das KI-System 114 für das Eigenschaftsmerkmal $B_4$ den Zugehörigkeitswert $q_4$.

Weiterhin können auch eine oder mehrere Objektkategorien definiert werden durch einen Satz von Kategorieeigenschaften und entsprechende Kategorieeigenschaftswerte. Beispielsweise könnte eine Objektkategorie $X$ definiert werden durch

$$\begin{bmatrix} X_1 \\ X_2 \\ X_3 \\ X_4 \end{bmatrix}$$

mit einem Kategorieeigenschaftsvektor

$$\begin{bmatrix} x_1 \\ x_2 \\ x_3 \\ x_4 \end{bmatrix}.$$

Eine Objektkategorie *Y* könnte definiert werden durch

$$\begin{bmatrix} Y_1 \\ Y_2 \\ Y_3 \\ Y_4 \end{bmatrix}$$

mit einem Kategorieeigenschaftsvektor

$$\begin{bmatrix} y_1 \\ y_2 \\ y_3 \\ y_4 \end{bmatrix}.$$

Die Kategorieeigenschaftswerte $x_1$, $x_2$, $x_3$, $x_4$ bzw. $y_1$, $y_2$, $y_3$, $y_4$ können dabei vom Benutzer definiert und/oder automatisch erlernt sein.

Der Zugehörigkeitsvektor bzw. die Zugehörigkeitsmatrix kann als Grundlage für eine Berechnung von Ähnlichkeiten zu anderen Objekten oder Objektkategorien genutzt werden. Eine Metrik, z.B. basierend auf einer Cosinus-Distanz, kann genutzt werden um die Ähnlichkeit zu quantifizieren. Die von der Metrik gelieferte Wert kann als die kombinierte KI-Ausgabe 31 oder Teil der kombinierten KI-Ausgabe 31 genutzt werden. In diesem Fall erfolgt die Bestimmung der kombinierten KI-Ausgabe 31 algorithmisch, so dass eine Nachvollziehbarkeit der Herleitung der kombinierten KI-Ausgabe 31 gewährleistet werden kann. Die Metrik kann dabei auch eine Auswahl und/oder Gewichtung der einzelnen KI-Verfahren vorsehen. Beispielsweise könnte ein Gewichtungsvektor

$$\begin{bmatrix} G_1 \\ G_2 \\ G_3 \\ G_4 \end{bmatrix}$$

definiert werden, wobei die Gewichtungsfaktoren $G_1$, $G_2$, $G_3$, $G_4$ definieren, wie stark die KI-Ausgaben 21, 22, 23, 24 in die Berechnung der Metrik einfließen. Eine Metrik zur Bestimmung der Ähnlichkeit des Objekts *A* zu der Objektkategorie *X* könnte somit wie folgt berechnet werden:

$$M = (p_1 - x_1)G_1 + (p_2 - x_2)G_2 + (p_3 - x_3)G_3 + (p_4 - x_4)G_4.$$

Dementsprechend könnte eine Metrik zur Bestimmung der Ähnlichkeit des Objekts *B* zu der Objektkategorie *Y* berechnet werden als:

$$M = (p_1 - y_1)G_1 + (p_2 - y_2)G_2 + (p_3 - y_3)G_3 + (p_4 - y_4)G_4.$$

Eine weitere Möglichkeit zur Bestimmung der kombinierten KI-Ausgabe kann auf einer Mittelung der aus den einzelnen KI-Verfahren gewonnenen Zugehörigkeitswerte $p_1$, $p_2$, $p_3$, $p_4$ bzw. $q_1$, $q_2$, $q_3$, $q_4$. Auch hierbei kann eine Auswahl und/oder Gewichtung erfolgen, z.B. gemäß

$$M = p_1 G_1 + p_2 G_2 + p_3 G_3 + p_4 G_4.$$

Die beispielhaft genannten Metriken können jeweils als Teil der kombinierten KI-Ausgabe 31 von der Vorrichtung 100 ausgegeben werden.

Zusätzlich bestimmt die Vorrichtung 100 Metadaten 32 zu der kombinierten KI-Ausgabe 31. Die Metadaten 32 beschreiben für wenigstens eines der KI-Systeme 111, 112, 113, 114 die Herleitung der jeweiligen KI-Ausgabe 21, 22, 23, 24. Beispielsweise könnten die Metadaten die Herleitung der KI-Ausgabe 21 auf Basis des regelbasierten KI-Verfahrens in dem KI-System 111 beschreiben. Durch die Metadaten wird somit die kombinierte KI-Ausgabe 32 nachvollziehbar gemacht, obwohl die kombinierte KI-Ausgabe 32 teilweise auf KI-Ausgaben 23, 24 aus nicht-transparenten KI-Verfahren basiert. Die KI-Ausgaben der 23, 24 der nicht-transparenten KI-Verfahren können somit indirekt über die transparenten KI-Verfahren nachvollziehbar gemacht werden. Weiterhin können die Metadaten 32 auch Details zur der bei der Bestimmung der kombinierten KI-Ausgabe 31 berechneten Metrik beinhalten, z.B. Abweichungen zu den einzelnen Komponenten der Metrik.

Wie dargestellt, kann der Vorrichtung 100 auch eine Benutzereingabe 33 zugeführt werden. Über die Benutzereingabe 33 kann der Benutzer der Vorrichtung die Bestimmung der kombinierten KI-Ausgabe 31 konfigurieren, z.B. durch Auswahl der zu kombinierenden KI-Ausgaben 21, 22, 23, 24 und/oder Konfiguration der Gewichtungen $G_1$, $G_2$, $G_3$, $G_4$. So kann beispielsweise durch Berücksichtigung der KI-Ausgabe 23 des neuronalen Netzes eine hohe Genauigkeit der kombinierten KI-Ausgabe 31 erreicht werden. Um jedoch eine verbesserte Nachvollziehbarkeit der kombinierten KI-Ausgabe 31 zu erreichen, kann der Benutzer die KI-Ausgabe 21 des regelbasierten KI-Verfahrens stärker berücksichtigen lassen. Zur verbesserten Nachvollziehbarkeit der kombinierten KI-Ausgabe 31 können die Metadaten 32 dann beispielsweise die Herleitung der KI-Ausgabe 21 durch das regelbasierte KI-Verfahren beschreiben, z.B. durch Darstellung eines entsprechenden Bayesschen Netzes.

Ein beispielhaftes Anwendungsszenario für das hybride KI-System betrifft eine Diagnose aufgrund von Bilddaten, Geräuschen und Textmeldungen in einem industriellen Produktionssystem. Die Eingangsdaten für das hybride KI-System können dabei beispielsweise durch eine Vielzahl von IoT-Sensoren erfasst werden (IoT: "Internet of Things" bzw. "Internet der Dinge"). In diesem Produktionssystem produziert eine Maschine Teile, die automatisch optisch inspiziert werden. Bei den Teilen kann es sich z.B. um gedruckte elektronische Schaltungen handeln. Weiterhin erzeugt die Maschine im Betrieb Geräusche, die aufgezeichnet und analysiert werden. Darüber hinaus verfügt die Maschine über eine Konsole oder einen Statusspeicher, wie z.B. ein Logfile, worin Statusmeldungen, Warnungen und Fehlermeldungen erfasst werden. Bei diesem System können als KI-Verfahren angewendet werden:

Verfahren 1: Auswertung von Daten der optischen Inspektion durch ein neuronales Netz mit dem Ergebnis $p_1$.
Verfahren 2: Auswertung der erfassten Geräusche durch eine Fourier-Analyse und ein regelbasiertes KI-Verfahren mit dem Ergebnis $p_2$.
Verfahren 3: Auswertung der Statusmeldungen, Warnungen und Fehlermeldungen durch ein regelbasiertes KI-Verfahren mit dem Ergebnis $p_3$.
Verfahren 4: Auswertung von Daten der optischen Inspektion durch klassische Bildanalyseverfahren, z.B. Erkennung von Rissen, und ein regelbasiertes KI-Verfahren mit dem Ergebnis $p_4$
Verfahren 5: Auswertung der erfassten Geräusche durch ein neuronales Netz mit dem Ergebnis $p_5$.

Der Zustand $A$ der Maschine kann zunächst durch die Werte $p_1$, $p_2$ und $p_3$ als Zugehörigkeitsvektor dargestellt werden.

Weiterhin können die folgenden Objektkategorien definiert werden: Kategorie $X$ für einen normalen Betrieb, Kategorie $Y$ für einen bestimmten Fehlerfall, und Kategorie $Z$ für einen anderen Fehlerfall. Eine Distanzmetrik wie oben beschrieben wird genutzt, um zu bestimmen, ob der Zustand $A$ eher zu $X$, zu $Y$ oder zu $Z$ passt.

Wenn im Fehlerfall $Y$ nun der Betreiber der Maschine wissen möchte warum gemäß der kombinierten KI-Ausgabe der Fehlerfall $Y$ diagnostiziert wurde und nicht der Fehlerfall $Z$ oder der Normalbetrieb $A$, kann der Betreiber aus den Metadaten zum einen die Abweichungen der einzelnen Zugehörigkeitswerte $p_1$, $p_2$ und $p_3$ von den entsprechenden Kategorieeigenschaften entnehmen. Hierdurch wird transparent zu welchem Anteil die optische oder akustische Analyse und die Auswertung der Statusmeldungen beigetragen zu der kombinierten KI-Ausgabe beigetragen haben. Da die optische Analyse zunächst gemäß Verfahren 1 durch ein neuronales Netz erfolgte, kann hier jedoch im Bedarfsfall keine weitere Erklärung geliefert werden. In diesem Fall kann der Betreiber jedoch die optische Analyse gemäß Verfahren 1 ersetzen durch das klassische Bildanalyseverfahren mit dem regelbasierten KI-Verfahren gemäß Verfahren 4, wodurch eine gegenüber der Auswertung durch das neuronale Netz verbesserte Nachvollziehbarkeit erreicht werden kann. Für die akustische Analyse und die Auswertung der Statusmeldungen können die verwendeten Regeln des KI-Verfahren in den Metadaten als Erklärungskomponente angezeigt werden. Falls eine verbesserte Vorhersageleistung gewünscht wird könnte der Betreiber jedoch auch beispielsweise die akustische Auswertung durch Fourier-Analyse und das regelbasierte KI-Verfahren gemäß Verfahren 3 ersetzen durch die akustische Auswertung durch das neuronale Netz gemäß Verfahren 5.

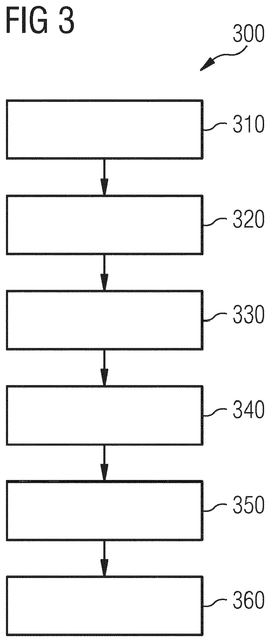

Fig. 2 zeigt ein Blockdiagramm zur Veranschaulichung einer beispielhaften Implementierung der Vorrichtung 100. Bei dem dargestellten Beispiel verfügt die Vorrichtung 100 über wenigstens einen Prozessor 150 sowie über einen Speicher 160. Weiterhin können eine Datenschnittstelle 170 und/oder eine Benutzerschnittstelle 180 vorgesehen sein. Die Komponenten der Vorrichtung 100, d.h. der wenigstens eine Prozessor 150, der Speicher 160 und optional die Datenschnittstelle 170 und/oder die Benutzerschnittstelle 180 können miteinander beispielsweise über einen Datenbus 190 oder eine vergleichbare Datenkommunikationseinrichtung gekoppelt sein. Mittels des wenigstens einen Prozessors 150 kann Programmcode ausgeführt werden, der in dem Speicher 160 abgelegt ist. Hierdurch kann die Vorrichtung 100 dazu veranlasst werden die hierin beschriebenen Funktionen, insbesondere die Erfassung der KI-Ausgaben 21, 22, 23,24 der einzelnen KI-Systeme 111, 112, 113, 114, die Bestimmung der kombinierten KI-Ausgabe 31 sowie die Bestimmung der Metadaten 32, auszuführen. Dies kann beispielsweise gemäß dem anhand von Fig. 3 beschriebenen Verfahren erfolgen.

Fig. 3 zeigt ein Flussdiagramm zur Veranschaulichung eines Verfahrens, das zur Implementierung der dargestellten Konzepte genutzt werden kann. Das Verfahren kann beispielsweise implementiert werden, indem Programmcode, welcher in dem Speicher 160 der Vorrichtung 100 abgelegt ist, von dem wenigstens einen Prozessor 150 ausgeführt wird.

Bei Block 310 werden KI-Ausgaben von einer Vielzahl von KI-Systemen erfasst. Die KI-Systeme können dabei insbesondere wenigstens ein KI-System beinhalten, welches auf einem transparenten KI-Verfahren basiert, z.B. ein auf einem regelbasierten KI-Verfahren basierendes KI-System wie das oben genannte KI-System 111 oder ein auf einem statistischen KI-Verfahren basierendes KI-System wie das oben genannte KI-System 112. Weiterhin können die KI-Systeme wenigstens ein KI-System beinhalten, welches auf einem nicht-transparenten KI-Verfahren basiert, z.B. ein auf einem neuronalen Netz basierendes oder auf maschinenbasiertem Lernen basierendes KI-Verfahren. Beispiele für die bei Block 310 erfassten KI-Ausgaben sind die oben genannten KI-Ausgaben 21, 22, 23, 24.

Bei Block 320 können eine oder mehrere Benutzereingaben erfasst werden, z.B. die oben genannte Benutzereingabe 33. die Benutzereingaben können beispielsweise über die Benutzerschnittstelle 180 der Vorrichtung 100 erfasst werden.

Bei Block 330 wird aus den bei Block 310 erfassten KI-Ausgaben eine kombinierte KI-Ausgabe bestimmt, z.B. die oben genannte kombinierte KI-Ausgabe 31. Dies kann basierend auf den bei Block 320 erfassten Benutzereingaben erfolgen. Die Bestimmung der kombinierten KI-Ausgabe kann eine Auswahl aus den bei Block 310 erfassten KI-Ausgaben und/oder eine Berechnung einer Metrik basierend auf den bei Block 310 erfassten KI-Ausgaben umfassen. Wie oben erläutert kann die Metrik beispielsweise über eine Distanz zwischen Vektoren definiert sein. Die Metrik kann auch auf meine Gewichtung der bei Block 310 erfassten KI-Ausgaben beruhen. Die Gewichtung kann dann basierend auf den bei Block 320 erfassten Benutzereingaben bestimmt sein.

Bei Block 340 werden Metadaten zu der bei Block 330 bestimmten kombinierten KI-Ausgabe bestimmt. Dies kann abhängig von der bei Block 320 erfassten Benutzereingabe erfolgen. Die Metadaten beschreiben für wenigstens eine der bei Block 310 erfassten KI-Ausgaben die Herleitung der KI-Ausgabe. Zu diesem Zweck können entsprechende Zusatzinformationen zu der KI-Ausgabe von dem jeweiligen KI-System abgerufen werden. Die KI-Systeme, welche die bei Block 310 erfassten KI-Ausgaben bereitstellen, können beispielsweise wenigstens ein KI-System umfassen, welches auf einem regelbasierten und/oder statistischen KI-Verfahren basiert. Die bei Block 340 bestimmten Metadaten können dann die Herleitung der KI-Ausgabe für das auf dem regelbasierten und/oder statistischen KI-Verfahren basierende KI-System beschreiben. Darüber hinaus können die KI-Systeme wenigstens ein KI-System umfassen, welches auf einem neuronalen Netz basierendes KI-System oder ein auf maschinenbasiertem Lernen basierendes KI-System umfassen. Alternativ oder zusätzlich können die KI-Systeme wenigstens ein KI-System umfassen, welches auf einem für einen Benutzer der Vorrichtung als geheim eingestuften KI-Verfahren basiert. Die Metadaten können dann auch für diese nicht-transparenten KI-Verfahren eine Nachvollziehbarkeit gewährleisten. Ein Beispiel für die bei Block 340 bestimmten Metadaten sind die oben genannten Metadaten 32.

Bei Block 350 wird die bei Block 330 bestimmte kombinierte KI-Ausgabe ausgegeben. Dies kann beispielsweise über die Benutzerschnittstelle 180 der Vorrichtung 100 erfolgen. Alternativ oder zusätzlich kann die kombinierte KI-Ausgabe auch über die Datenschnittstelle 170 der Vorrichtung 100 ausgegeben werden.

Bei Block 360 werden die bei Block 340 bestimmten Metadaten ausgegeben. Dies kann wiederum beispielsweise über die Benutzerschnittstelle 180 der Vorrichtung 100 erfolgen. Alternativ oder zusätzlich können die Metadaten auch über die Datenschnittstelle 170 der Vorrichtung 100 ausgegeben werden.

Es versteht sich, dass bei den vorangegangenen Beispielen zahlreiche Modifikationen möglich sind. So ist das dargestellte hybride KI-System in einer Vielzahl von weiteren Anwendungsszenarien nutzbar, z.B. zur Bereitstellungen von Diagnosen oder Wartungsempfehlungen für ein Datennetz oder ein Fahrzeug. Weiterhin können eine Vielzahl verschiedener KI-Verfahren und KI-Systeme miteinander kombiniert werden, ohne Beschränkung auf die in den obigen Beispielen genannten KI-Verfahren.

**Patentansprüche**

1. Vorrichtung (100) zur Verarbeitung von KI-Daten, wobei die Vorrichtung (100) ausgestaltet ist zum:

- Erfassen von KI-Ausgaben (21, 22, 23, 24), welche von einer Vielzahl von (111, 112, 113, 114) bereitgestellt werden,
- Kombinieren der KI-Ausgaben (21, 22, 23, 24) der KI-Systeme (111, 112, 113, 114) zu einer kombinierten KI-Ausgabe (11),
- Bestimmen von Metadaten (32) zu der kombinierten KI-Ausgabe (31), welche eine Herleitung wenigstens einer der KI-Ausgaben (21, 22, 23, 24) beschreiben, und
- Ausgeben der kombinierten KI-Entscheidung (31) und der Metadaten (32).

**2.** Vorrichtung (100) nach Anspruch 1,
wobei die Vorrichtung (100) weiterhin ausgestaltet ist zum:

- Erfassen einer Benutzereingabe (33), und
- Bestimmen der Metadaten (12) abhängig von der Benutzereingabe (13).

**3.** Vorrichtung (100) nach Anspruch 1 oder 2,
wobei die Vorrichtung (100) weiterhin ausgestaltet ist zum:

- Erfassen einer Benutzereingabe (33), und
- Kombinieren der der KI-Ausgaben zu der kombinierten KI-Ausgabe (31) abhängig von der Benutzereingabe (33).

**4.** Vorrichtung (100) nach einem der vorhergehenden Ansprüche, wobei das Kombinieren der KI-Ausgaben (21, 22, 23, 24) ein Auswählen aus den KI-Ausgaben (21, 22, 23, 24) der KI-Systeme (111, 112, 113, 114) umfasst.

**5.** Vorrichtung (100) nach einem der vorhergehenden Ansprüche, wobei das Kombinieren der KI-Ausgaben (21, 22, 23, 24) auf einer Metrik basiert, welche Werte der KI-Ausgaben (21, 22, 23, 24) auf einen kombinierten Wert abbildet.

**6.** Vorrichtung (100) nach Anspruch 5,
wobei die Vorrichtung (100) weiterhin ausgestaltet ist zum:

- Erfassen einer Benutzereingabe (33), und
- basierend auf der Benutzereingabe (33) Bestimmen einer Gewichtung der KI-Ausgaben (21, 22, 23, 24) in der Metrik.

**7.** Vorrichtung (100) nach einem der vorhergehenden Ansprüche, wobei die KI-Systeme (111, 112, 113, 114) wenigstens ein KI-System (111, 112) umfassen, welches auf einem regelbasierten und/oder statistischen KI-Verfahren basiert, und
wobei die Metadaten die Herleitung der KI-Ausgabe (21, 22) für das auf dem regelbasierten und/oder statistischen KI-Verfahren basierende KI-System (111, 112) beschreiben.

**8.** Vorrichtung (100) nach Anspruch 7,
wobei die KI-Systeme (111, 112, 113, 114) darüber hinaus wenigstens ein KI-System (113) umfassen, welches auf einem neuronalen Netz basiert.

**9.** Vorrichtung (100) nach Anspruch 7 oder 8,
wobei die KI-Systeme (111, 112, 113, 114) darüber hinaus wenigstens ein KI-System (114) umfassen, welches auf einem für einen Benutzer der Vorrichtung (100) als geheim eingestuften KI-Verfahren basiert.

**10.** Verfahren (300) zur Verarbeitung von KI-Daten, umfassend:

- Erfassen von KI-Ausgaben (21, 22, 23, 24), welche von einer Vielzahl von (111, 112, 113, 114) bereitgestellt werden,
- Kombinieren der KI-Ausgaben (21, 22, 23, 24) der KI-Systeme (111, 112, 113, 114) zu einer kombinierten KI-Ausgabe (31),
- Bestimmen von Metadaten (32) zu der kombinierten KI-Ausgabe (31), welche eine Herleitung wenigstens einer der KI-Ausgaben (21, 22, 23, 24) beschreiben, und
- Ausgeben der kombinierten KI-Entscheidung (31) und der Metadaten (32).

**11.** Verfahren (300) nach Anspruch 10, weiterhin umfassend:

- Erfassen einer Benutzereingabe (33), und
- Bestimmen der Metadaten (12) abhängig von der Benutzereingabe (13).

**12.** Verfahren (300) nach Anspruch 10 oder 11, weiterhin umfassend:

- Erfassen einer Benutzereingabe (33), und
- Kombinieren der der KI-Ausgaben (21, 22, 23, 24) zu der kombinierten KI-Ausgabe (31) abhängig von der Benutzereingabe (33) .

**13.** Verfahren (300) nach einem der Ansprüche 10 bis 12, wobei das Kombinieren der KI-Ausgaben (21, 22, 23, 24) ein Auswählen aus den KI-Ausgaben (21, 22, 23, 24) der KI-Systeme (111, 112, 113, 114) umfasst.

**14.** Verfahren (300) nach einem der Ansprüche 10 bis 13, wobei das Kombinieren der KI-Ausgaben (21, 22, 23, 24) auf einer Metrik basiert, welche Werte der KI-Ausgaben (21, 22, 23, 24) auf einen kombinierten Wert abbildet.

**15.** Verfahren (300) nach Anspruch 14, weiterhin umfassend:

- Erfassen einer Benutzereingabe (33), und
- basierend auf der Benutzereingabe (33) Bestimmen einer Gewichtung der KI-Ausgaben (21, 22, 23, 24) in der Metrik.

**16.** Verfahren (300) nach einem der Ansprüche 10 bis 15, wobei die KI-Systeme (111, 112, 113, 114) wenigstens ein KI-System (111, 112) umfassen, welches auf einem regelbasierten und/oder statistischen KI-Verfahren basiert, und wobei die Metadaten die Herleitung der KI-Ausgabe (21, 22) für das auf dem regelbasierten und/oder statistischen KI-Verfahren basierende KI-System (111, 112) beschreiben.

**17.** Verfahren (300) nach Anspruch 16, wobei die KI-Systeme (111, 112, 113, 114) darüber hinaus wenigstens ein KI-System (113) umfassen, welches auf einem neuronalen Netz basiert.

**18.** Verfahren (300) nach Anspruch 16 oder 17, wobei die KI-Systeme (111, 112, 113, 114) darüber hinaus wenigstens ein KI-System (114) umfassen, welches auf einem für einen Benutzer der Vorrichtung (100) als geheim eingestuften KI-Verfahren basiert.

**19.** Computerprogrammprodukt, welches Programmcode umfasst, der bei Ausführung durch einen oder mehrere Prozessoren (150) einer programmierbaren Vorrichtung (100) bewirkt, dass die Vorrichtung (100) ein Verfahren nach einem der Ansprüche 10 bis 18 ausführt.

# FIG 1

# FIG 2

FIG 3

300

310

320

330

340

350

360

Europäisches
Patentamt

European
Patent Office

Office européen
des brevets

## EUROPÄISCHER RECHERCHENBERICHT

Nummer der Anmeldung

EP 18 21 4361

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | VIKTORIYA KRAKOVNA ET AL: "Increasing the Interpretability of Recurrent Neural Networks Using Hidden Markov Models", ARXIV.ORG, CORNELL UNIVERSITY LIBRARY, 201 OLIN LIBRARY CORNELL UNIVERSITY ITHACA, NY 14853, 18. November 2016 (2016-11-18), XP080732696, * das ganze Dokument *<br>----- | 1-19 | INV.<br>G06N3/04<br>G06N5/04<br>G06N7/00 |
| X | ZHITING HU ET AL: "Harnessing Deep Neural Networks with Logic Rules", PROCEEDINGS OF THE 54TH ANNUAL MEETING OF THE ASSOCIATION FOR COMPUTATIONAL LINGUISTICS (VOLUME 1: LONG PAPERS), 1. Januar 2016 (2016-01-01), Seiten 2410-2420, XP055433576, Stroudsburg, PA, USA DOI: 10.18653/v1/P16-1228 * das ganze Dokument *<br>----- | 1-19 | |
| X | LIU XUAN ET AL: "Improving the Interpretability of Deep Neural Networks with Knowledge Distillation", 2018 IEEE INTERNATIONAL CONFERENCE ON DATA MINING WORKSHOPS (ICDMW), IEEE, 17. November 2018 (2018-11-17), Seiten 905-912, XP033516297, DOI: 10.1109/ICDMW.2018.00132 [gefunden am 2019-02-07] * das ganze Dokument *<br>-----<br><br>-/-- | 1-19 | **RECHERCHIERTE SACHGEBIETE (IPC)**<br><br>G06N |

Der vorliegende Recherchenbericht wurde für alle Patentansprüche erstellt

| Recherchenort | Abschlußdatum der Recherche | Prüfer |
|---|---|---|
| Den Haag | 14. Juni 2019 | Moro Pérez, Gonzalo |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes
    Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

Nummer der Anmeldung

EP 18 21 4361

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | RICCARDO GUIDOTTI ET AL: "A Survey of Methods for Explaining Black Box Models", ACM COMPUTING SURVEYS, ACM, NEW YORK, NY, US, US, Bd. 51, Nr. 5, 22. August 2018 (2018-08-22), Seiten 1-42, XP058413521, ISSN: 0360-0300, DOI: 10.1145/3236009 * das ganze Dokument * ----- | 1-19 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 14. Juni 2019 | Moro Pérez, Gonzalo |

EPO FORM 1503 03.82 (P04C03)

Seite 2 von 2